# EUROPEAN PATENT APPLICATION

(11) **EP 2 660 764 A1**
(43) Date of publication of application: **06.11.2013**
(21) Application number: 12195342.6
(22) Date of filing: 03.12.2012
(51) Int. Cl.: G06Q 30/00

(54) **System and method for effecting payment to a beneficiary including a real-time authorisation of the payment**

(30) Priority: 30.04.2012 ZA 201203099
(71) Applicant: Abine Limited, Tortola (VG)
(72) Inventor: Masie, Stafford Clint, Gauteng 2196 (ZA)
(74) Representative: Butler, Michael John

(57) **Abstract**

A system for effecting remote payment to a beneficiary including a real-time authorisation of the payment, said system comprising: a personal peripheral payment device, operable to facilitate a payment transaction through use of a conventional banking card payment mechanism, said banking card payment mechanism including entering a password associated with said banking card as well as presenting said banking card during a transaction authorisation process.

## Description

### FIELD OF THE INVENTION

The present invention relates to a system for and a method of effecting payment to a beneficiary so as to include a real-time authorisation of the payment. More particularly, the present invention relates to a system for and a method of effecting payment to a beneficiary by means of a conventional banking card, including a real-time authorisation of the payment.

### BACKGROUND TO THE INVENTION

It is to be appreciated that a large number of online payment mechanisms currently exist today which enable money to be exchanged between parties online, including traditional e-commerce payments, bill and/or approved beneficiary payments and on-demand services also known as "impulse buying".

### Traditional E-Commerce Payments

In this regard, the most widely used mechanisms to buy goods, or pay for services on an electronic-commerce website and effecting payment is through one or more of the following payment mechanisms:
- entering credit card details on the website in question, which culminates in a card-not-present, credit card payment (in other words, a standard credit card electronic-commerce, shopping cart checkout transaction).
- entering debit card details on the website and authorising the transaction by entering their debit card Personal Identification Number (PIN) using the Pay-DTM Authenticated Mobile Transaction (AMT) payment mechanism. This generally precedes a Subscriber Identification Module (SIM)-driven PIN handling process on their mobile phone.
- Traditional Electronic Funds Transfer (EFT) via Internet banking, in branch transfers, transfers at an Automatic Teller Machine (ATM) with a proof of payment generally sent manually by means of a fax or email.
- A payment mechanism known as "instant-EFT" where a website is integrated into a payment service provider (PSP). This provides web browser control that the user can allow to orchestrate their Internet banking process to make the payment and provide the proof of payment to the merchant in the same session (for example, providers such as SetCom™, Payfast™ etc).

It is to be appreciated that the main concern with the abovementioned payment mechanisms is that the above transactions are either risky (to both the payer and the merchant because the card details can be compromised on the website (both credit and debit cards), or the transaction can be refuted by the payer at a later stage leaving the merchant out-of-pocket due to the chargeback. It is also cumbersome for the payer and the merchant to reconcile the transaction if manual proof of payment is to be provided after an EFT, or, the payer may have his Internet banking credentials compromised if the "instant EFT" process is intercepted by a man-in-the-middle attack during the payment process. In addition, in the end, all the above card transactions in the electronic commerce world today, are still "card not present" transactions which do not illicit protection from VISA™ or MasterCard™ or other payment associations.

### Traditional Bill and/or Approved Beneficiary Payments

The bill payment world of today is not dissimilar to the e-Commerce transaction and payment flow as described above, but, the following variances apply:
- The event that triggers the payment is typically a billing agreement or contract that is in place for retail credit, utility bills, subscription services, periodic service renewals or other installment or recurring payments that become due at different times.
- Remote payments in the Electronic Bill Presentment and Payment (EBPP) space today are typically handled via: an electronic funds transfer (EFT), a debit order, a payment service provider e.g. EasyPay™ or a recurring card-not-present debit transaction against a credit card (in these instances, the Card Verification Value (CVV2) number has been stored by the web site and as such, it is still not in compliance with the Payment Card Industry (PCI) Data Security Standard (DSS).
- Alternatives are face-to-face payments where the payer needs to travel to the merchant to present either cash, or a card to complete the transaction.

It is to be appreciated that the main concern with the above-mentioned means of bill payment is that these transactions are risky and expensive from the payer's or the merchant's perspective. In this regard, the particular points of concern for the merchant are that debit orders are automated processes that are prone to failure due to insufficient funds in the payer's account at the time that the debit order runs and such debit order failures leads to poor consumer experiences and huge banking fees accrued against the consumer account. Furthermore, debit orders need to be managed tightly to ensure that the correct amounts are requested where the payment amount is variable, and debit orders are cancelled in time if the account has been fully settled in person by the payer. In addition, debit orders are automatically cancelled after a few failures to effect a debit.

It is also to be appreciated that face to face payments where cash is used exposes the merchant to high cash handling and security fees, and high crime risks. If payments are made via 3^{rd} party Payment Service Providers (PSP) like EasyPay™ and the like, they are exposed to high fees (3^{rd} party processing as well as card acquiring fees).

The particular points of concern for the payers is that the payer does not have control over and can't re-select the payment account that is used for the effecting of the payment in addition to not having control over the date that the payment is made. Similarly, the payer does not have control over the payment amount and has to trust the merchant to only request the correct amount that is due.

In addition, the payer cannot choose to pay more, or less than the requested amount for any given payment period, are exposed to huge banking fees in the case that a debit order is returned unpaid. Similarly, cash withdrawal fees are often high and they need to pay for travel as well as arrange to have time available to stand in queues to make in-person, face-to-face payments.

It is also to be appreciated that, for the payer, capturing payment particulars and billing reference account information when a new beneficiary is created is a process that creates uncertainty with the payer and they need to have access to internet banking, or be in the vicinity of a banking branch to perform an EFT or the like. In addition, all the same risks and disadvantages exist same as in the case of traditional e-Commerce payments where a payer needs to provide card information on a website to make a remote payment.

### Traditional On-Demand Services

Digital entertainment services today are moving more and more away from people watching "scheduled programming" to people wanting to create their own schedules according to their own preferences. The rapid growth in TiVo™, IPTV™ and other on demand services attest to this. Monetisation remains one of the main challenges service providers face in the delivery of on-demand services.

Social media or traditional media driven campaigns, in-application payments, charity collections or other fund raising campaigns are frequently monetized via premium rate short message service (SMS) messages due to the high bar that is set to achieve PCI DSS certification before card-not-present transactions are allowed.

It has always been a challenge to create a simple mechanism to allow a buyer to "on impulse" buy a concert ticket that is being advertised on air, or to make a purchase directly from seeing a printed add, or to pay for an on-demand movie, or to buy more game credits in an application as the same risks and concerns as highlighted under the electronic-commerce payment section applies.

In view of the above, it will be appreciated that there exists a need in the industry for an alternative means of securely transferring funds which incorporates the use of a Personal Identification Number (PIN) so as to have the security of the above-mentioned indemnification in place. In addition, it is widely considered that a general need exists among consumers to have a more effective means of conveying banking information other than through a conventional bank account number.

It is further to be appreciated that need exists in the industry for an immediate authorisation of a transfer of funds between entities, such as is the case where a banking card or credit card is used to effect a financial transaction.

### OBJECT OF THE INVENTION

The object of this invention is to provide a system and a method which will at least partially alleviate the above problem and provide the advantage indicated above.

### SUMMARY OF THE INVENTION

According to a first aspect of the invention, there is provided a system for effecting remote payment to a beneficiary including a real-time authorisation of the payment, said system comprising:
a personal peripheral dongle, operable to facilitate a payment transaction through use of a conventional banking card payment mechanism, said banking card payment mechanism including entering a password associated with said banking card as well as presenting said banking card during a transaction authorisation process.

In an embodiment of the invention, said payment transaction is completed on the basis of a logical reference architecture in terms of which said beneficiary is associated with a logical reference. In this embodiment, said logical reference architecture is operable to perform a logical name lookup to find a supported beneficiary name and set up a payment profile using payment particulars of said beneficiary.

### E-Commerce Transactions

In an embodiment of the invention, said payment transaction is facilitated through an electronic commerce website, said website being integrated with said payment device as regards facilitation of said payment transaction.

In this embodiment of the invention, said logical reference architecture includes:
one or more payment particulars of each of said intended beneficiaries of said payment transaction; and
a mechanism operable to associate a payment effected from a location on the world wide web of said electronic commerce website with said one or more payment particulars.

In this embodiment, said payment transaction includes authenticating a user onto a profile created for said user. In this embodiment of the invention, said authentication of said user includes use of a shared identity mechanism, said identity mechanism being operable to provide an identity token for use in executing said payment transaction. In this embodiment, said shared identity mechanism is provided in the form of a single-sign-on (SSO) transaction.

In an alternative embodiment, said authentication of said user includes use of said electronic commerce website, said website being operable to provide an identity token in response to said website being prompted, said identity token being operable to execute said payment transaction.

In this embodiment, said payment transaction is further facilitated through selection of said card payment mechanism as a preferred method of payment. In this embodiment of the invention, said payment transaction includes an identity service identifying one or more peripheral payment devices associated with said user and/or said system.

### Bill and/or Approved Beneficiary Payments

In an embodiment of the invention, said payment transaction is facilitated through a bill payment transaction by means of a bill presentment portal. In this embodiment, said system includes said bill presentment portal integrated therewith. In an example embodiment of the invention, said bill presentment portal is provided in the form of an electronic bill payment and presentment platform (EBPP) which is integrated with said system.

In this embodiment of the invention, said system further includes a hyperlink provided on either a bill or a bill payment reminder, said hyperlink being operable to invoke an electronic bill payment process on said bill presentment portal.

In this embodiment of the invention, said logical reference architecture comprises:
one or more hyperlinks associated with an intended payment to each of one or more intended beneficiaries; and
a mechanism operable to associate a payment transaction including said one or more hyperlinks with one or more payment particulars of each of said intended beneficiaries of said payment transaction.

In this embodiment of the invention, said payment transaction includes said user authorising said payment through entering of a personal identification password (PIN) as associated with said banking card as well as the identification and addition of a particular payment device, so to achieve a card-present payment transaction. In this embodiment of the invention, said payment transaction further includes returning a success or failure result code as well as a payment reference number to a bill payment portal, EBPP platform or an integrated beneficiary so as to close said transaction.

### On-Demand Services

In an embodiment of the invention, said payment transaction is facilitated through digital content provider platform, said content provider platform being integrated with said system. In an alternative embodiment, said payment transaction is facilitated through a website, said website being integrated with said system.

In this embodiment, said payment transaction includes said digital content provider or said website authenticating a user onto a profile created for said user. In this embodiment of the invention, said authentication of said user includes use of a shared identity mechanism, said identity mechanism being operable to provide an identity token for use in executing said payment transaction. In this embodiment, said shared identity mechanism is provided in the form of a single sign-on (SSO) transaction.

In an alternative embodiment, said authentication of said user includes use of said electronic commerce website, said website being operable to provide an identity token in response to said website being prompted, said identity token being operable to execute said payment transaction.

In a further alternative embodiment of the invention, in response to said user responding to an advertisement or media campaign, a communication message is sent to an external service provider integrated with said system or another commerce service provider associated with said system, so as to initiate a purchase of one or more goods or services from said external service provider or commerce service provider.

In the above embodiments of the invention, said communication message is provided in the form of a short message service (SMS) short-code, a Tweet™, an electronic mail or another form of social network message.

In this embodiment of the invention, in response to receipt of said communication message, said external service provider or commerce service provider, said payment transaction is initiated. In this embodiment, said external or commerce service provider identifies one or more payment devices associated with said user/system.

### Paying Your Own Beneficiaries

In an embodiment of the invention, said payment transaction includes one or more of the following:
determining payment particulars of one or more of said beneficiaries;
determining a logical name for each of said one or more beneficiaries, said logical name being associated with said payment particulars of each of said beneficiaries; and
facilitating payment to an intended beneficiary through conventional manual entry of a password associated with a banking card of a user and physical presentation of said banking card during said transaction process.

In an embodiment of the invention, said determining of a logical name for said beneficiary includes one or more of: compiling a new logical name or selecting a new name from a list of existing logical names.

In an embodiment of the invention, said effecting of a transfer of funds to said located beneficiary includes debiting a bank account associated with the user's bank card and crediting an account of said located beneficiary with a predetermined amount specified by said user. In this embodiment of this invention, said account of said located beneficiary includes an account held at a financial institution such as a bank, a credit union and the like. In this embodiment of the invention, said account of said located beneficiary is a virtual wallet account.

In an embodiment, said banking card is provided in the form of: a credit card of said user, a cheque card of said user or a debit card of said user. In an embodiment of the invention, where said banking card is provided in the form of a credit card payment is effected to a bank account other than a bank account associated with said credit card of said user.

### Person To Person Payments

In an embodiment of the invention, said payment transaction comprises:
locating banking particulars of said intended beneficiary on the basis of said selected or compiled logical name; and
effecting a transfer of funds from said bank account of said user to a bank account of said located beneficiary.

In this embodiment of the invention, said payment transaction includes adding a notification preference to inform one or more intended beneficiaries of said payment transaction. In this embodiment of the invention, said notification preference is provided in the form of an email address, a mobile number, a social media handle or the like.

### Miscellaneous

In any of the above embodiments of the invention, said payment transaction includes said user being promoted to insert said peripheral payment device into a mobile device and swipe or insert a payment card.

Alternatively, said payment transaction includes said user being prompted to insert the payment card into in a keypad model point-of-sale (POS) device or alternatively into an integrated peripheral payment device.

In this embodiment of the invention, said presentation of said banking card during said transaction authorisation process includes one or more of: swiping a magnetic stripe of magnetic stripe version of said banking card through a peripheral payment device or inserting a chip of a chip-and-pin version of said banking card into said peripheral payment device, so as to facilitate payment from said banking card in a conventional manner.

In these embodiments, said payment transaction is concluded when said user authorises a payment by entering their payment card personal identification number (PIN). In these embodiments of the invention, a success or failure result will be returned to the electronic-commerce website with a payment reference number so as to enable a transaction flow to be closed.

In an embodiment of the invention, said payment particulars include one or more of the following: a bank account number, a local branch or sort code, an international bank account number (IBAN), an internationally recognised identifier code (a SWIFT code) or information associated with an electronic wallet.

In an embodiment of the invention, said computing device is provided in the form of a mobile device. In this embodiment of the invention, said mobile device is provided in the example form of a personal digital assistant (PDA), a laptop, a tablet, a mobile phone, a peripheral point of sale device, and the like.

In an embodiment of the invention, said system further comprises a software application operable to facilitate a transfer of funds from a bank account of a user to a bank account of said intended beneficiary through use of said conventional banking card of said user at a peripheral payment device.

According to a second aspect of the invention, there is provided a method of effecting payment to a beneficiary including a real-time authorisation of the payment, said method comprising the steps of:
operating a payment card with regard to a peripheral payment device;
authorising said payment through a user entering their payment card personal identification number (PIN) for processing by said peripheral payment device; and
returning a success or failure result to said peripheral device including a payment reference number so as to enable a transaction flow to be closed.

### BRIEF DESCRIPTION OF THE DRAWINGS

These and other features of this invention will become apparent from the following description of one example described with reference to the accompanying drawings in which:
- **Figure 1**: shows a system for effecting payment by means of a conventional banking account to a beneficiary on the basis of a logical reference associated with the beneficiary, in accordance with one embodiment of the present invention;
- **Figure 2**: shows a flow diagram of a method of effecting payment using the system as shown in Figure 1, according to one embodiment of the present invention;
- **Figure 3**: shows a machine in the example form of a mobile device within which a set of instructions, for causing the machine to perform any one or more of the methodologies discussed herein, may be executed.

### DETAILED DESCRIPTION OF THE DRAWINGS

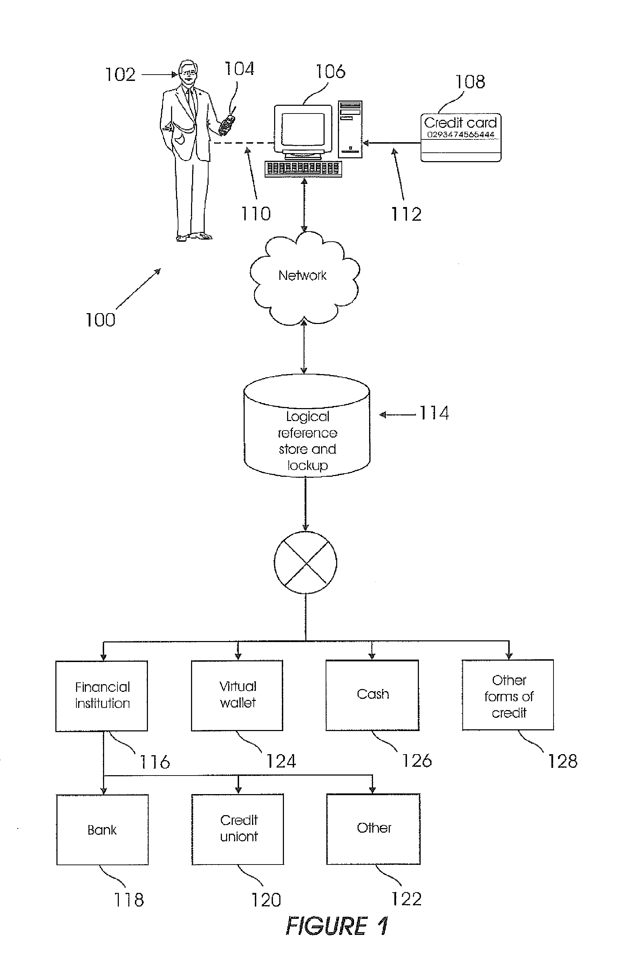

With reference to Figure 1, a system for effecting payment to the bank account of a user, in accordance with the invention, is generally indicated by reference numeral 100.

The system 100 includes a computing device such as a mobile device 104, in the example form of a cellular phone, operated by a user 102. The mobile device 104 is connected to a peripheral payment device 106 which is operable to facilitate a payment transaction from a conventional banking card 108.

It is to be appreciated that, in accordance with embodiments of the invention, should the banking card 108 be provided in the form of a chip-and-pin card the chip of the card 108 can be inserted into the payment device so as to facilitate payment from the card 108 in a conventional manner. Further, should the banking card 108 be provided in the form of a magnetic stripe card, the magnetic stripe of the card 108 can be swiped through the card so as to facilitate payment from the card, in a conventional manner. It is further to be appreciated, in accordance with the embodiments of the invention, the user is provided with an opportunity to enter the Personal Identification Number (PIN) associated with the banking card 108. This PIN is required to authorize the proposed payment transaction.

The system 100 further comprises a logical reference architecture store and lookup facility 114 in the example form of a database or similar storage mechanism. In this example embodiment, the logical reference architecture store and lookup 114 is connected to the peripheral payment device 112 through a network 130. However, it is to be appreciated the payment device 112 and the logical reference architecture store and lookup facility 114 could form part of a single device unit.

It is to be appreciated that in accordance with embodiments of the invention, the logical reference store and lookup facility, in the form of the database 114, is capable of storing a logical reference associated with the banking particulars of a user. The banking particulars of the user can then be looked-up from within the database 114, by means of a database query or the like.

In use, the user 102 will select the beneficiary he/she wants to pay from an own list or from the logical name reference store and lookup facility (in the example form of a database, 114) provided by the system 100. The user 102 is then prompted to insert a payment device 112 into the mobile device 104 and swipe or insert the banking card 108, as explained in more detail above. The transaction is then authorized when the user 102 enters his/her card banking card PIN. The system 100 will then return either a success of a failure result code as well as a payment reference number to allow the transaction flow to be closed.

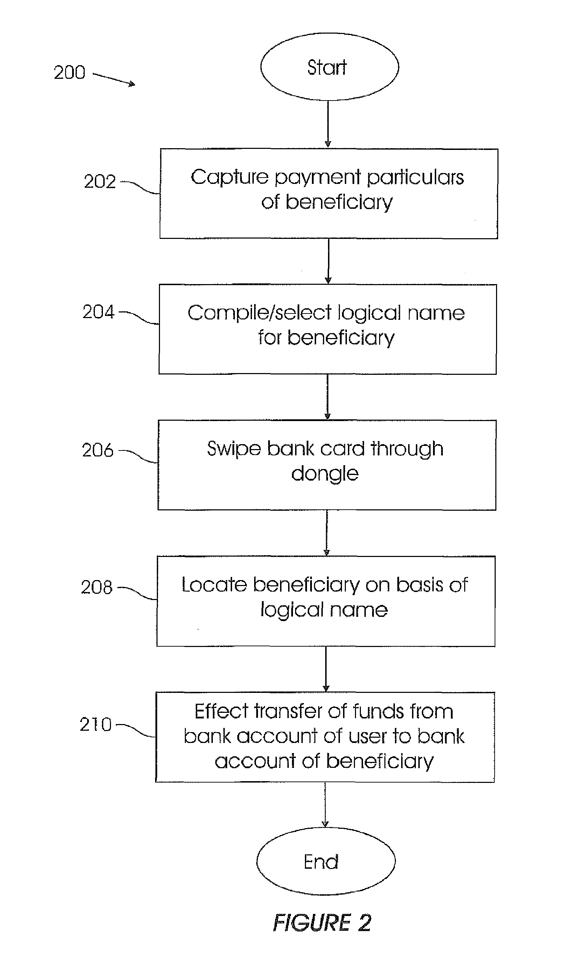

With reference to Figure 2, a method of effecting payment using the system 100 as shown in Figure 1, is generally indicated by reference numeral 200.

At block 202, the payment particulars of one or more beneficiaries are loaded onto the system 100. It is to be appreciated that these payment particulars may include a bank account number, a local branch or sort code, an international bank account number (IBAN), an internationally recognised identifier code (a SWIFT code), information associated with an electronic wallet or the like.

The user of the system 100, is then prompted, at block 204, to either compile a new logical name or select a logical name from an pre-loaded list of existing logical names. It is to be appreciated that the logical name of the beneficiary will then be associated with the banking particulars of the beneficiary, as previously loaded onto the system 100.

In this example embodiment of the invention, a payment from the banking account of the user is then scheduled to be effected to the beneficiary associated with the abovementioned compiled or selected logical name. It is to be appreciated that a user does not have to effect payment to the beneficiary at this point in time and can merely be pre-loading beneficiary banking particulars and associated logical names onto the system.

Should the user wish to effect payment to a beneficiary he/she is requested to either swipe a conventional magnetic stripe banking card or enter a chip of a chip-and-pin banking card into a peripheral payment device, at block 206. The transaction is then authenticated by the user using his/her PIN, as associated with the banking card. At the back-end of the system, a look-up of the logical name is conducted and banking particulars of the beneficiary are determined, at block 208.

At block 210, a transfer of funds is facilitated form the bank account of the user to the intended bank account of the beneficiary. A payment from the banking card will then be transacted through the system in a conventional manner. The payment is then effected to the beneficiary associated with the selected or compiled logical name.

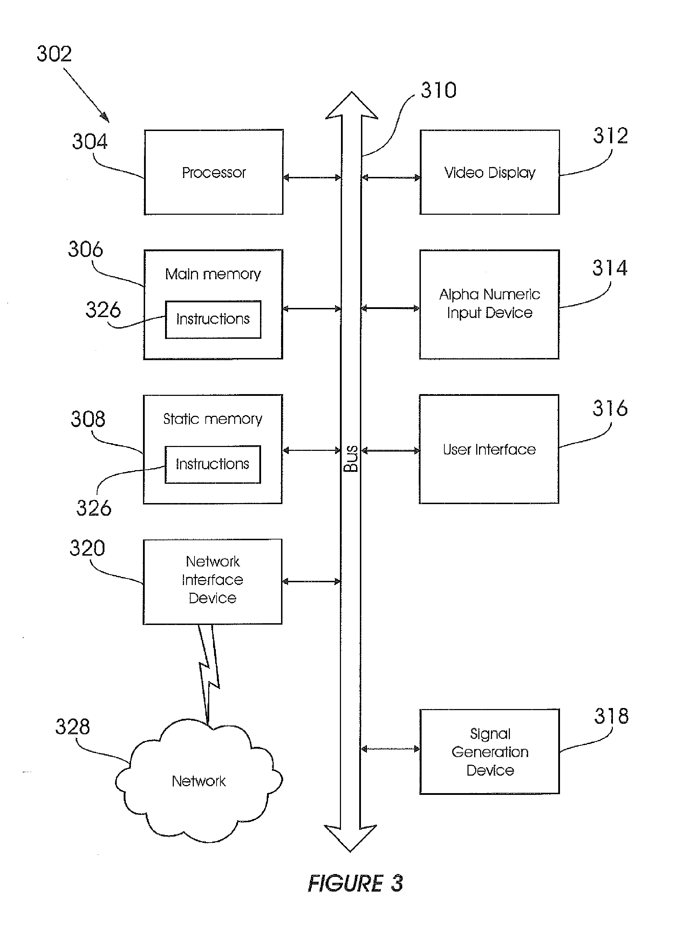

In Figure 3, a diagrammatic representation of a computing device 104 in the example form of a mobile device 302 within which a set of instructions, for causing the machine to perform any one or more of the methodologies discussed herein, may be executed. As mentioned above, in alternative embodiments, the machine operates as a standalone device or may be connected to other devices (such as the peripheral payment device 106).

In more detail, the example mobile device 302 includes a conventional processor 304 (e.g. a central processing unit (CPU), a graphics processing unit (GPU) or both), a main memory 306 and a static memory 308, which communicate with each other via a bus 310. The mobile device 302 may further include a conventional video display unit 312 e.g. a liquid crystal display. The mobile device 302 also includes a conventional alphanumeric input device (e.g. a touch screen or keyboard panel) 314, a user interface (UI) 316, a signal generation device 318 (e.g. a speaker) and a network interface device 320.

The main memory component 306 includes one or more sets of instructions and data structures (e.g. a software component 326) and, when configured in accordance with an embodiment of the invention, the software component 326 comprises a variety of instructions and data sets which correspond to functional tasks performed by the processor 304. The functional tasks in question relate to providing a means of effecting payment from the banking card of a user to the an intended beneficiary including a real-time authorisation of the payment, as described in more detail with reference to Figures 1 and 2.

The software component 326 may also reside, completely or at least partially, within the static memory component 308 and the processor 304 also constituting machine readable media. The software 326 may further be transmitted or received over a network 328 via the network interface device 320 utilizing any one of a number of well-known transfer protocols (e.g. FTP).

## Claims

1. A system for effecting remote payment to a beneficiary including a real-time authorisation of the payment, said system comprising:
a personal peripheral payment device, operable to facilitate a payment transaction through use of a conventional banking card payment mechanism, said banking card payment mechanism including entering a password associated with said banking card as well as presenting said banking card during a transaction authorisation process.

2. A system as claimed in claim 1, wherein said payment transaction is completed on the basis of a logical reference architecture in terms of which said beneficiary is associated with a logical reference.

3. A system as claimed in any one of claims 1 or 2, wherein said logical reference architecture is operable to perform a logical name lookup to find a supported beneficiary name and set up a payment profile using payment particulars of said beneficiary.

4. A system as claimed in any one of claims 1 to 3, wherein said payment transaction is facilitated through an electronic commerce website, said website being integrated with said payment device as regards facilitation of said payment transaction.

5. A system as claimed in claim 4, wherein said logical reference architecture includes:
one or more payment particulars of each of said intended beneficiaries of said payment transaction; and
a mechanism operable to associate a payment effected from a location on the world wide web of said electronic commerce website with said one or more payment particulars.

6. A system as claimed in any one of claims 1 to 5, wherein said payment transaction includes authenticating a user onto a profile created for said user.

7. A system as claimed in claim 6, wherein said authentication of said user includes use of a shared identity mechanism, said identity mechanism being operable to provide an identity token for use in executing said payment transaction.

8. A system as claimed in claim 7, wherein said shared identity mechanism is provided in the form of a single-sign-on (SSO) transaction.

9. A system as claimed in any one of claims 1 to 8, wherein said payment transaction is facilitated through a bill payment transaction by means a bill presentment and payment platform integrated with said system.

10. A system as claimed in claim 9, wherein said system further includes a hyperlink provided on either a bill or a bill payment reminder, said hyperlink being operable to invoke an electronic bill payment process on said bill presentment and payment platform.

11. A system as claimed in any one of claims 9 or 10, wherein said logical reference architecture comprises:
one or more hyperlinks associated with an intended payment to each of one or more intended beneficiaries; and
a mechanism operable to associate a payment transaction including said one or more hyperlinks with one or more payment particulars of each of said intended beneficiaries of said payment transaction.

12. A system as claimed in any of claims 1 to 11, wherein said payment transaction includes one or more of the following:
determining payment particulars of one or more of said beneficiaries;
determining a logical name for each of said one or more beneficiaries, said logical name being associated with said payment particulars of each of said beneficiaries; and
facilitating payment to an intended beneficiary through conventional manual entry of a password associated with a banking card of a user and physical presentation of said banking card during said transaction process.

13. A system as claimed in any of claims 1 to 12, wherein said system further comprises a software application operable to facilitate a transfer of funds from a bank account of a user to a bank account of said intended beneficiary through use of said conventional banking card of said user at a peripheral payment device.

14. A method of effecting payment to a beneficiary including a real-time authorisation of the payment, said method comprising the steps of:
operating a payment card with regard to a peripheral payment device;
authorising said payment through a user entering their payment card personal identification number (PIN) for processing by said peripheral payment device; and
returning a success or failure result to said peripheral device including a payment reference number so as to enable a transaction flow to be closed.
